# EUROPÄISCHE PATENTSCHRIFT

(11) **EP 1 612 681 B1**
(45) Veröffentlichungstag und Bekanntmachung des Hinweises auf die Patenterteilung: **07.05.2008**
(21) Anmeldenummer: 04015410.6
(22) Anmeldetag: 30.06.2004
(51) Int. Cl.: G06F 12/06, G06F 13/38

(54) **Steckplatzerkennung in einem Bussystem**
Slot recognition for a bus system
Identification des emplacements dans un système de bus

(43) Veröffentlichungstag der Anmeldung: 04.01.2006
(73) Patentinhaber: SIEMENS AKTIENGESELLSCHAFT, 80333 München (DE)
(72) Erfinder: Grosser, Stefan, 92253 Schnaittenbach (DE); Hirmer, Gerald, 92708 Mantel (DE); Maier, Mario, 92266 Ensdorf (DE)

(56) Entgegenhaltungen:
- WO-A-94/16382
- DE-A- 3 303 826
- US-A- 5 179 670

## Beschreibung

Die Erfindung betrifft ein Bussystem mit Steckplätzen zur Aufnahme von Baugruppen, wobei jedem Steckplatz eine Adresse zugeordnet ist, sowie eine Baugruppe, die zur Aufnahme an einem der Steckplätze eines solchen Bussystems geeignet ist.

Ein solches Bussystem mit Steckplätzen zur Aufnahme von Baugruppen kann Teil einer speicherprogrammierbaren Steuerung in einem Automatisierungssystem, insbesondere einem industriellen Automatisierungssystem, sein. Ein solches Bussystem hat üblicherweise die Eigenschaft, dass Baugruppen herausgezogen werden können, ohne dass der Busverkehr zu den anderen Baugruppen des Bussystems unterbrochen wird. Um das zu erreichen, verwendet man eine Backplane mit Steckplätzen, in die alle Baugruppen hineingesteckt werden. Auf der Backplane verlaufen die Busleitungen, an welche die Baugruppen parallel angeschlossen werden. Von einem Teilnehmer am Busverkehr, z.B. einer Zentraleinheit (CPU = Central Processing Unit) können Daten über die Datenleitungen des Bus versendet werden. Solche Daten werden von allen an den Bus angeschlossenen Baugruppen empfangen.

Sind die Daten nur für eine der empfangenen Baugruppen relevant, so muss diese Baugruppe einzeln adressierbar sein. Daher wird üblicherweise den einzelnen Steckplätzen jeweils eine im Bussystem eindeutige Adresse zugeordnet. Eine Baugruppe, welche an einem Steckplatz mit einer zugewiesenen Adresse angeschlossen ist, kann somit über diese Adresse adressiert werden. Ein von einem Teilnehmer gesendetes, für die jeweilige Baugruppe bestimmtes Datenpaket enthält somit neben den Nutzdaten auch eine Information über die Adresse des Steckplatzes bzw. der Baugruppe, welche von der jeweiligen Baugruppe erkannt wird. Einer Baugruppe auf einem bestimmten Steckplatz muss zuvor jedoch mitgeteilt werden, dass sie der Teilnehmer mit der jeweiligen Adresse ist, damit sie darauf reagieren kann, wenn Daten auf dem Bus versendet werden, in denen die jeweilige Empfängeradresse eingetragen ist.

Für das Problem der Steckplatzerkennung bzw. Adresseinstellung gibt es verschiedene Lösungsmöglichkeiten. So sind manuelle Adressschalter auf der Baugruppe oder die Taufe der Baugruppe im Werk oder beim Kunden üblich. Weitere bekannte Lösungen verwenden eine Adressauswahlleitung auf dem Bus, eine durch die Baugruppen durchgeschliffene Busleitung oder Konfigurationspins auf dem Bus. Diese Lösungen weisen verschiedene Nachteile auf. So verlangen sie teilweise vom Anwender eine fehlerträchtige Aktion, verursachen erhöhte Softwareaufwendungen in der Zentraleinheit, benötigen zusätzliche Steckerpins oder verursachen generell zusätzliche Kosten.

Nach WO94/16382 wird anhand einer Zeitdifferenz zwischen einem ersten und einem zweiten Signal eine Adresse ermittelt, wobei das zweite Signal anhand eines Verzögerungselementes auf einer Einschubkarte (expansion device) verzögert und anschließend an den nächsten Steckplatz weitergeleitet wird. Für den Fall, dass sich keine Einschubkarte in einem Steckplatz befindet, erfordert diese Anordnung für die nachfolgenden Steckplätze eine zusätzliche Durchschaltvorrichtung an jedem Steckplatz.

Der Erfindung liegt die Aufgabe zugrunde, eine vereinfachte Steckplatzerkennung zu ermöglichen.

Diese Aufgabe wird durch ein Bussystem gemäß Patentanspruch 1 sowie durch eine Baugruppe gemäß Patentanspruch 7 gelöst. Das erfindungsgemäße Bussystem weist Steckplätze zur Aufnahme von Baugruppen auf, wobei über eine Datenleitung des Bussystems ein erstes Signal mit einer ersten Taktflanke übermittelbar ist, wobei zur Zuordnung von jeweils einer Adresse zu einem Steckplatz den Steckplätzen ein durch eine an dem jeweiligen Steckplatz aufgenommene Baugruppe abgreifbares zweites Signal mit einer zweiten Taktflanke zuführbar ist, wobei aus einer Zeitdifferenz zwischen der zweiten und der ersten Taktflanke eine Adresse des jeweiligen Steckplatzes eindeutig ermittelbar ist und wobei durch jeden Steckplatz die Zeitdifferenz zwischen der zweiten und der ersten Taktflanke um eine vordefinierte und somit im System bekannte Zeit vergrößert wird.

Sie erfindungsgemäße Baugruppe ist zur Aufnahme an mindestens einem der Steckplätze eines solchen Bussystems geeignet, wobei die Baugruppe Auswertemittel zur Auswertung der Zeitdifferenz zwischen der zweiten und der ersten Taktflanke und zur Zuordnung einer Adresse in Abhängigkeit vom Ergebnis der Auswertung aufweist.

Die erfindungsgemäße Lösung ermöglicht es den Baugruppen, den Steckplatz bzw. die Adresse des Steckplatzes, an welchem sie aufgenommen werden, selbstständig zu erkennen.

Die erfindungsgemäße Baugruppe weist vorteilhafterweise Auswertemittel zur Messung der Zeitdifferenz zwischen der zweiten und der ersten Taktflanke auf. Vorteilhafterweise werden die Auswertemittel als anwenderspezifisch integrierte Schaltung (ASIC) ausgeführt.

Vorteilhafterweise wird ein solches Bussystem innerhalb einer speicherprogrammierbaren Steuerung bzw. eines Automatisierungssystems, insbesondere eines industriellen Automatisierungssystems, eingesetzt.

Nachfolgend wird die Erfindung anhand der in den Figuren dargestellten Ausführungsbeispiele näher beschrieben und erläutert.

Es zeigen:
- FIG 1: ein Bussystem mit Steckplätzen zur Aufnahme von Baugruppen und
- FIG 2: ein Bussystem, bei welchem den Steckplätzen ein erstes und ein zweites Signal zugeführt wird.

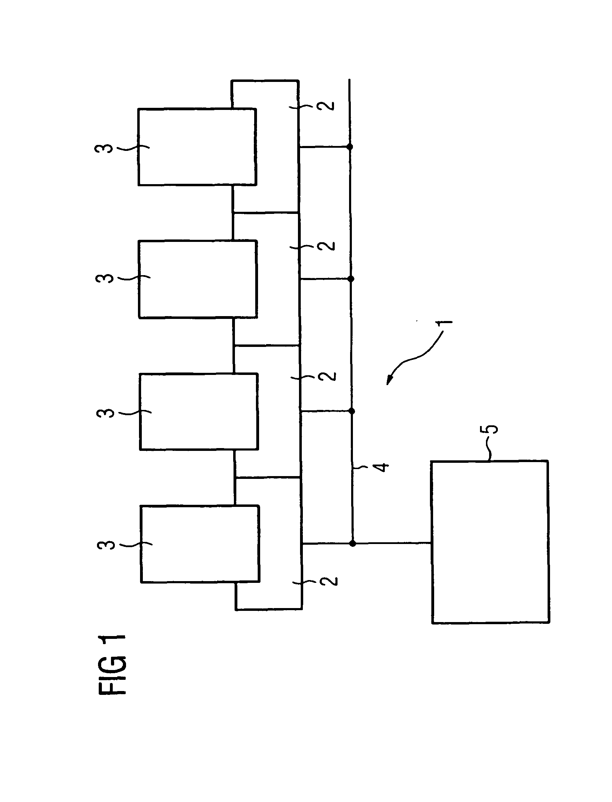

Figur 1 zeigt ein Bussystem 1 mit Steckplätzen 2 zur Aufnahme von Baugruppen 3. Die Steckplätze 2 und somit auch die in den Steckplätzen 2 aufgenommenen Baugruppen 3 sind über Busleitungen 4 miteinander verbunden. Eine Zentraleinheit 5 (CPU) ist ebenfalls an die Busleitungen 4 angeschlossen. Die Gesamtheit der Busleitungen 4 wird als Bus bezeichnet. Die Zentraleinheit 5 kann in einem der Steckplätze aufgenommen sein oder wie dargestellt auf andere Art mit dem Bus verbunden sein. Die Zentraleinheit 5 kommuniziert über den Bus mit den Baugruppen 3. Die Baugruppen 3 können über den Bus miteinander kommunizieren. Die Steckplätze 2 bzw. Baugruppen 3 sind parallel an die Busleitungen 4 angeschlossen, so dass durch einen Ausfall bzw. das Herausziehen einer Baugruppe 3 der Busverkehr zwischen den restlichen Baugruppen 3 und der Zentraleinheit 5 über die Busleitungen 4 nicht beeinträchtigt wird. Jedem der Steckplätze 2 ist eine innerhalb des Bussystems 1 eindeutige Adresse zugewiesen, über welche die in den Steckplätzen 2 aufgenommenen Baugruppen 3 jeweils ansprechbar sind. Um einer in einem Steckplatz befindlichen Baugruppe mitzuteilen, welche Adresse sie innerhalb des Bussystems 1 hat, gibt es gemäß dem Stand der Technik mehrere Lösungen, welche im Folgenden erläutert werden.

Zum einen ist üblich, über Adressschalter auf der Baugruppe oder eine Taufe der Baugruppe im Werk oder beim Kunden die Adresse einzustellen. Es ist möglich, auf der Baugruppe einen Adressschalter zu integrieren, mit welchem die Adresse manuell eingestellt werden kann. Die Baugruppe, z.B. eine digitale Ausgabebaugruppe, vergleicht die Adresse aus einem über den Bus versendeten Datenpaket mit der Adresse, die über den Schalter eingestellt ist. Stimmen beide Adressen überein, so erkennt die Baugruppe, dass das Datenpaket für sie bestimmt ist und kann darauf reagieren. Nachteilig an dieser Lösung ist insbesondere, dass ein Anwender die Adresse von Hand an jeder Baugruppe einstellen muss. Wird an zwei Baugruppen versehentlich die gleiche Adresse eingestellt, so funktioniert das gesamte Bussystem nicht mehr, weil eine Datenkollision auftritt. Ebenso führt es zu Fehlern, wenn bei der Baugruppe eine falsche Adresse eingestellt wird. Die Adresseinstellung von Hand ist somit fehlerträchtig und umständlich, da der Anwender bei einem Baugruppenwechsel die Adresse an der neuen Baugruppe von Hand einstellen muss und die neue Baugruppe nicht einfach in das Bussystem bzw. den Steckplatz hineinstecken kann. Statt des Adressschalters kann auch ein Speicher auf der Baugruppe integriert sein, in welchen der Anwender z.B. mittels eines Programmiergeräts eine Adresse hineinschreiben kann.

Eine weitere aus dem Stand der Technik bekannte Möglichkeit der Adressierung von Baugruppen bzw. Steckplätzen besteht darin, zu jedem Steckplatz eine zusätzliche Leitung zu führen. In diesem Fall kann die Zentraleinheit einer Baugruppe mit der jeweiligen Leitung anwählen und der Baugruppe mitteilen, welche Adresse sie bekommt. Danach kann die Zentraleinheit Datenpakete verschicken, weil die jeweilige Baugruppe ihre eigene Adresse kennt und damit selbst herausfinden kann, welche der versendeten Datenpakete für sie bestimmt sind. Nachteilig an dieser Lösung ist es, dass eine zusätzliche Leitung zu jedem Steckplatz geführt werden muss. Insbesondere bei einem System mit vielen Steckplätzen bedeutet das jedoch einen wesentlich erhöhten Hardwareaufwand. Zudem muss die Zentraleinheit vor Beginn des eigentlichen Datenverkehrs jede Baugruppe mittels der zusätzlichen Leitung selektieren und ihr jeweils die Adresse mitteilen, auf welche sie reagieren soll. Wird eine Baugruppe aus einem solchen Bussystem herausgenommen (z.B. weil sie defekt ist) und gegen eine neue Baugruppe ausgetauscht, so muss die Zentraleinheit erkennen, dass die Baugruppe gewechselt wurde und muss der neuen Baugruppe wiederum die Adresse übermitteln.

Eine weitere aus dem Stand der Technik bekannte Möglichkeit besteht darin, ein serielles Schieberegister zu verwenden. Die Zentraleinheit kann in diesem Fall Daten durch alle Baugruppen hindurch schieben. Dabei spricht sie zuerst alle Baugruppen über parallele Busleitungen an um ihnen mitzuteilen, dass sie in den Schieberegistermodus umschalten sollen. Die Baugruppen bilden dann zusammen ein großes Schieberegister mit z.B. 128 Bit Länge (z.B. 16 Baugruppen mit je 8 Bit Schieberegister). In diesem Fall schiebt die Zentraleinheit ein Datenpaket mit genau 128 Bit Länge über eine zusätzliche, durchgeschliffene Leitung durch die Baugruppen hindurch. In diesem Datenpaket sind die Baugruppenadressen derart angeordnet, dass nach dem Schieben um 128 Bit in jedem Schieberegister innerhalb einer Baugruppe genau die jeweilige Baugruppenadresse vorliegt. In einem nächsten Schritt kann die Zentraleinheit über die parallelen Busleitungen den Baugruppen mitteilen, dass sie den Schieberegisterinhalt auslesen und als Baugruppenadresse verwenden sollen. Damit ist den Baugruppen die eigene Adresse bekannt. Die Zentraleinheit kann daraufhin Datenpakete über die parallelen Busleitungen an die Baugruppen senden. Nachteilig an dieser Lösung ist neben der zusätzlichen Leitung, dass die Baugruppen ein Schieberegister integriert haben müssen sowie lückenlos aneinandergereiht sein müssen. Sobald ein Steckplatz nicht belegt ist, wird das baugruppenübergreifende Schieberegister unterbrochen. Die Zentraleinheit hat dann keine Möglichkeit, den Baugruppen, die nach der Lücke gesteckt sind, die Adresse zu übermitteln.

Bei einer weiteren aus dem Stand der Technik bekannten Lösung wird an jedem Steckplatz mit Pins eine Adresse fest eingestellt. Dafür werden zusätzliche Steckerpins benötigt. Bei 16 Steckplätzen sind z.B. 4 Steckerpins nötig, um jedem Steckplatz eine eindeutige Adresse zuzuordnen.

Das erfindungsgemäße Bussystem vermeidet die Nachteile der beschriebenen aus dem Stand der Technik bekannten Lösungen.

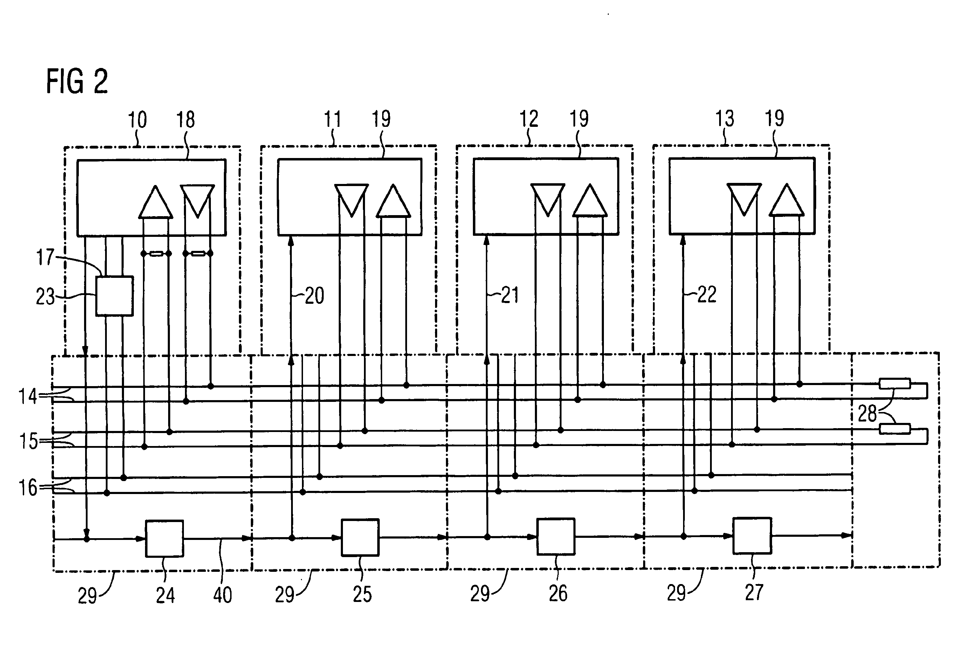

Figur 2 zeigt ein Bussystem, bei welchem den Steckplätzen über eine Busleitung 14 ein erstes Signal mit einer ersten Taktflanke und über eine zusätzliche Leitung 40 ein zweites Signal mit einer zweiten Taktflanke übermittelt wird. Das Bussystem gemäß Figur 2 weist so genannte Busmodule 29 auf, welche Steckplätze für Baugruppen 10 - 13 aufweisen. Die auf dem ersten Steckplatz aufgenommene Baugruppe 10 ist in diesem Fall eine Zentraleinheit. In den übrigen drei Steckplätzen befinden sich in diesem Fall Peripheriebaugruppen. Die Verbindung zwischen den einzelnen Steckplätzen wird mit den Busmodulen 29 hergestellt. Der Bus wird durch Busleitungen 14 - 16 gebildet. Dabei sind die Busleitungen 14 als so genannte Write-Leitungen, die Busleitungen 15 als so genannte Read-Leitungen und die Busleitungen 16 als Stromversorgungsleitungen ausgebildet. Die Busleitungen 14, 15, auch Datenleitungen genannt, sind am physikalischen Busende jeweils durch einen Abschlusswiderstand 28 abgeschlossen. Die Stromversorgungsleitungen 16 werden über eine Stromversorgung 17 der Zentraleinheit 10 gespeist. Die Baugruppen 10 - 13 weisen jeweils eine anwenderspezifisch integrierte Schaltung, den so genannten Bus-ASIC 18, 19 auf, welcher die Kommunikation der Baugruppen 10 - 13 über die Busleitungen 14, 15 abwickelt.

In eine der Datenleitungen, in die Busleitung 14, speist die Zentraleinheit ein erstes elektrisches Signal mit einer ersten, unverzögerten Taktflanke ein. Das erste Signal bzw. die erste Taktflanke steht somit an allen Steckplätzen unverzögert an. In die zusätzliche Leitung 40 speist die Zentraleinheit ein zweites elektrisches Signal mit einer zweiten, gegenüber der ersten Taktflanke vorerst unverzögerten Taktflanke ein. Auf der Backplane bzw. in den Busmodulen 29 wird die Taktflanke durch Zeitverzögerungsmittel 24 - 27 jeweils um eine bestimmte Zeit verzögert. Die Zeitverzögerungsmittel 24 - 27 im Busmodul können als aktive Bauteile (z. B. Monoflop) oder über Laufzeiten mit unterschiedlichen Leitungslängen realisiert werden. Gemäß dem Ausführungsbeispiel wird die Taktflanke an jedem Steckplatz bzw. in jedem Busmodul 29 um die konstante Verzögerungszeit T = 1 ms verzögert. Die Baugruppen 11 - 13 greifen das zweite Signal 20 - 22 mit der zweiten Taktflanke am jeweiligen Steckplatz ab. Anhand der jeweiligen Zeitdifferenz zwischen der zweiten Taktflanke des zweiten Signals auf der Leitung 40, auch Verzögerungsleitung genannt, und der ersten Taktflanke des ersten Signals auf der Datenleitung erkennen die Baugruppen 11 - 13, auf welchem Steckplatz sie sich befinden. Beispielsweise speist die Zentraleinheit 10 am ersten Steckplatz zum Zeitpunkt t = 0 je ein Signal mit einer Taktflanke (im Folgenden Signalwechsel genannt) auf die Datenleitung und die Verzögerungsleitung ein. Der Signalwechsel an der Datenleitung steht unverzögert zum Zeitpunkt t = 0 an allen Steckplätzen an.
Der Signalwechsel an der Verzögerungsleitung steht zum Zeitpunkt t = 1 * T (z. B. = 1 ms) am zweiten Steckplatz an.
Der Signalwechsel an der Verzögerungsleitung steht zum Zeitpunkt t = 2 * T (z. B. = 2 ms) am dritten Steckplatz an.
Der Signalwechsel an der Verzögerungsleitung steht zum Zeitpunkt t = 3 * T (z. B. = 3 ms) am vierten Steckplatz an.

Entsprechend würde der Signalwechsel jeweils um die Zeitdifferenz T = 1 ms verzögert an weiteren Steckplätzen anstehen, wenn diese vorhanden wären. Der Anzahl der solchermaßen adressierbaren Steckplätze ist keine physikalische Grenze gesetzt. Dieses Verfahren kann daher auch dann angewendet werden, wenn sehr viele Baugruppen an einem Bus betrieben werden sollen. Wenn z.B. 100 Baugruppen betrieben werden, ist es trotzdem noch möglich, den Steckplatz sicher zu erkennen. Die Zeitdifferenz beträgt im oben genannten Beispiel dann 100 ms. Eine sehr genaue Zeitmessung ist in den Baugruppen sehr einfach zu realisieren.

Wird eine Baugruppe 11 - 13 in das Bussystem gesteckt, so misst sie die Zeitdifferenz zwischen der Taktflanke des jeweiligen Signals 20 - 22 und der Taktflanke des über die Datenleitung übermittelten Signals, d. h. die Zeitdifferenz zwischen dem Auftreten des Signalwechsels an der Datenleitung und dem Auftreten des Signalwechsels an der Verzögerungsleitung. Anhand der jeweils gemessenen Zeitdifferenz erkennt sie den Steckplatz. Die Zuordnung zwischen dem Wert der jeweiligen Zeitdifferenz und der jeweiligen Adresse ist der Baugruppe bekannt oder erfolgt durch eine geeignete Schaltungsanordnung zur Einstellung der Adresse automatisch. Die Schaltung ermöglicht es den Baugruppen 11 - 13 somit, ihren Steckplatz selbstständig zu erkennen. Durch die eindeutige Zuordnung einer Adresse zu jedem Steckplatz und durch die eindeutige Zuordnung der Adresse zu einer Zeitdifferenz ist der am jeweiligen Steckplatz aufgenommenen Baugruppe somit eine selbstständige Adresseinstellung ermöglicht. Beispiel: Die Baugruppe misst eine Zeitdifferenz von 2 ms. Sie steckt also auf dem dritten Steckplatz. Wenn die Zentraleinheit nun ein Datenpaket für den dritten Steckplatz sendet, erkennt die Baugruppe, dass es für sie bestimmt ist. Im Unterschied zum Stand der Technik muss somit weder eine manuelle Adresseinstellung erfolgen, noch müssen in der Zentraleinheit Softwaremechanismen zur Adressübertragung in die Baugruppe 11 - 13 ablaufen. Lediglich eine zusätzliche Leitung 40 innerhalb des Bussystems ist notwendig. Die Eigenstromaufnahme der vorgeschlagenen Schaltungsanordnung ist sehr gering und die Schaltung ist kostengünstig herzustellen. Zudem sind Zeitdifferenzen mit relativ einfachen Mitteln sehr genau zu bestimmen.

Zusammengefasst betrifft die Erfindung somit ein Bussystem 1 mit Steckplätzen 2 zur Aufnahme von Baugruppen 3. Es wird vorgeschlagen, dass zur einfachen, automatischen Zuordnung von jeweils einer Adresse zu einem Steckplatz 2 über eine Datenleitung des Bussystems ein erstes Signal mit einer ersten Taktflanke übermittelbar ist und den Steckplätzen 2 ein durch eine an dem jeweiligen Steckplatz 2 aufgenommene Baugruppe 3 abgreifbares zweites Signal mit einer zweiten Taktflanke zuführbar ist, wobei aus einer Zeitdifferenz zwischen der zweiten und der ersten Taktflanke eine Adresse des jeweiligen Steckplatzes 2 eindeutig ermittelbar ist. Die Erfindung betrifft zudem eine Baugruppe 3, die zur Aufnahme an mindestens einem der Steckplätze 2 eines solchen Bussystems 1 geeignet ist, wobei die Baugruppe 3 Auswertemittel zur Auswertung der Zeitdifferenz zwischen der zweiten und der ersten Taktflanke und zur Zuordnung einer Adresse in Abhängigkeit vom Ergebnis der Auswertung aufweist.

## Patentansprüche

1. Bussystem (1) mit Steckplätzen (2) zur Aufnahme von Baugruppen (3), wobei über eine Datenleitung des Bussystems ein erstes Signal mit einer ersten Taktflanke übermittelbar ist, wobei zur Zuordnung von jeweils einer Adresse zu einem Steckplatz (2) den Steckplätzen (2) ein durch eine an dem jeweiligen Steckplatz (2) aufgenommene Baugruppe (3) abgreifbares zweites Signal mit einer zweiten Taktflanke zuführbar ist, wobei aus einer Zeitdifferenz zwischen der zweiten und der ersten Taktflanke eine Adresse des jeweiligen Steckplatzes (2) eindeutig ermittelbar ist **dadurch gekennzeichnet daß** durch jeden Steckplatz die Zeitdifferenz zwischen der zweiten und der ersten Taktflanke um eine vordefinierte und somit im System bekannte Zeit vergrößert wird.

2. Bussystem nach Anspruch 1,
**dadurch gekennzeichnet ,**
**dass** die Steckplätze (2) parallel an Busleitungen (4) angeschlossen sind.

3. Bussystem nach Anspruch 1 oder 2,
**dadurch gekennzeichnet ,**
**dass** das zweite Signal über eine zusätzliche Leitung (40) den Steckplätzen (2) zuführbar ist.

4. Bussystem nach einem der vorhergehenden Ansprüche,
**dadurch gekennzeichnet ,**
**dass** das zweite Signal derart zuführbar ist, dass die Zeitdifferenz zwischen der zweiten und der ersten Taktflanke an jedem Steckplatz (2) unterschiedlich ist.

5. Bussystem nach einem der vorhergehenden Ansprüche,
**dadurch gekennzeichnet ,**
**dass** die Zeitdifferenz zwischen der zweiten und der ersten Taktflanke an jedem Steckplatz (2) bezüglich der Zeitdifferenz zwischen der zweiten und der ersten Taktflanke an einem vorhergehenden Steckplatz (2) um eine vordefinierte Zeit vergrößert ist.

6. Bussystem nach einem der vorhergehenden Ansprüche,
**dadurch gekennzeichnet ,**
**dass** das zweite Signal von einen vorhergehenden Steckplatz um eine vordefinierte Zeit verzögert an einen nachfolgenden Steckplatz weitergegeben wird.

7. Baugruppe (3), die zur Aufnahme an mindestens einem der Steckplätze (2) eines Bussystems (1) nach einem der vorhergehenden Ansprüche geeignet ist, wobei die Baugruppe (3) Auswertemittel zur Auswertung der Zeitdifferenz zwischen der zweiten und der ersten Taktflanke und zur Zuordnung einer Adresse in Abhängigkeit vom Ergebnis der Auswertung aufweist.

8. Baugruppe nach Anspruch 7,
**dadurch gekennzeichnet ,**
**dass** die Auswertemittel zur Messung der Zeitdifferenz zwischen der zweiten und der ersten Taktflanke vorgesehen sind.

9. Baugruppe nach Anspruch 7 oder 8,
**dadurch gekennzeichnet ,**
**dass** die Auswertemittel als anwenderspezifisch integrierte Schaltung ausgeführt sind.

10. Speicherprogrammierbare Steuerung mit einem Bussystem nach einem der Ansprüche 1 bis 6.

11. Automatisierungssystem, insbesondere industrielles Automatisierungssystem, mit einer speicherprogrammierbaren Steuerung nach Anspruch 10.

## Claims

1. Bus system (1) with plug-in locations (2) for accommodating modules (3), whereby a first signal with a first clock edge can be conveyed by way of a data line of the bus system, whereby in each case in order to assign an address to a plug-in location (2) a second signal with a second clock edge which can be read off by means of a module (3) accommodated at the plug-in location (2) in question can be delivered to the plug-in locations (2), whereby an address for the plug-in location (2) in question can be determined uniquely from a time difference between the second and the first clock edge.
**characterised in that**
the time difference between the second and the first clock edge is increased through each plug-in location by a predefined time which is thus known in the system.

2. Bus system according to claim 1,
**characterised in that**
the plug-in locations (2) are connected in parallel to bus lines (4).

3. Bus system according to claim 1 or 2,
**characterised in that**
the second signal can be delivered by way of an additional line (40) to the plug-in locations (2).

4. Bus system according to one of the preceding claims,
**characterised in that**
the second signal can be delivered in such a manner that the time difference between the second and the first clock edge is different at each plug-in location (2).

5. Bus system according to one of the preceding claims,
**characterised in that**
the time difference between the second and the first clock edge at each plug-in location (2) is increased by a predefined time with reference to the time difference between the second and the first clock edge at a preceding plug-in location (2).

6. Bus system according to one of the preceding claims,
**characterised in that**
the second signal is forwarded to a following plug-in location after being delayed by a predefined time by a preceding plug-in location.

7. Module (3), which is suitable for inclusion in at least one of the plug-in locations (2) of a bus system (1) according to one of the preceding claims, whereby the module (3) has evaluation facilities for evaluating the time difference between the second and the first clock edge and for making an address assignment depending on the result of the evaluation.

8. Module according to claim 7,
**characterised in that**
the evaluation facilities are provided for measuring the time difference between the second and the first clock edge.

9. Module according to claim 7 or 8,
**characterised in that**
the evaluation facilities are implemented as an application-specific integrated circuit.

10. Programmable logic controller with a bus system according to one of claims 1 to 6.

11. Automation system, particularly an industrial automation system, with a programmable logic controller according to claim 10.

## Revendications

1. Système de bus (1) avec logements (2) pour loger des modules (3), un premier signal pouvant être transmis avec un premier front d'horloge par l'intermédiaire d'une ligne de données du système de bus, un deuxième signal qui peut être prélevé par un module (3) logé dans un logement (2) pouvant être envoyé avec un deuxième front d'horloge aux logements (2) en vue de l'attribution à chaque fois d'une adresse à un logement (2) et une adresse du logement respectif (2) pouvant être déterminée sans équivoque à partir d'une différence temporelle entre le deuxième et le premier front d'horloge,
**caractérisé par le fait que** la différence temporelle entre le deuxième et le premier front d'horloge est augmentée, par chaque logement, d'un temps prédéfini et donc connu dans le système.

2. Système de bus selon la revendication 1,
**caractérisé par le fait que** les logements (2) sont raccordés parallèlement à des lignes de bus (4).

3. Système de bus selon la revendication 1 ou 2,
**caractérisé par le fait que** le deuxième signal peut être envoyé aux logements (2) par l'intermédiaire d'une ligne supplémentaire (40).

4. Système de bus selon l'une des revendications précédentes,
**caractérisé par le fait que** le deuxième signal peut être envoyé de telle sorte que la différence temporelle entre le deuxième et le premier front d'horloge est différente dans chaque logement (2).

5. Système de bus selon l'une des revendications précédentes,
**caractérisé par le fait que** la différence temporelle entre le deuxième et le premier front d'horloge dans chaque logement (2) est augmentée d'un temps prédéfini en comparaison de la différence temporelle entre le deuxième et le premier front d'horloge dans un logement précédent (2).

6. Système de bus selon l'une des revendications précédentes,
**caractérisé par le fait que** le deuxième signal est retransmis par un logement précédent à un logement suivant avec un retard égal à un temps prédéfini.

7. Module (3) qui peut être logé dans au moins l'un des logements (2) d'un système de bus (1) selon l'une des revendications précédentes, le module (3) comportant des moyens d'évaluation pour l'évaluation de la différence temporelle entre le deuxième et le premier front d'horloge et pour l'attribution d'une adresse en fonction du résultat de l'évaluation.

8. Module selon la revendication 7,
**caractérisé par le fait que** les moyens d'évaluation sont prévus pour la mesure de la différence temporelle entre le deuxième et le premier front d'horloge.

9. Module selon la revendication 7 ou 8,
**caractérisé par le fait que** les moyens d'évaluation sont réalisés comme un circuit intégré spécifique à l'application.

10. Commande par programme enregistré avec un système de bus selon l'une des revendications 1 à 6.

11. Système automatisé, notamment système automatisé industriel, ayant une commande par programme enregistré selon la revendication 10.
